**Europäisches Patentamt**

**European Patent Office**

**Office européen des brevets**

(19)

(11) Veröffentlichungsnummer: **0 292 705 B1**

# EUROPÄISCHE PATENTSCHRIFT

(12)

(45) Veröffentlichungstag der Patentschrift:
24.07.91 Patentblatt 91/30

(51) Int. Cl.⁵ : **F01D 9/02, F04D 29/42**

(21) Anmeldenummer: **88106485.1**

(22) Anmeldetag: **22.04.88**

(54) **Spiralgehäuse für Turbo-Arbeitsmaschinen.**

(30) Priorität: **22.05.87 DE 3717234**

(43) Veröffentlichungstag der Anmeldung:
**30.11.88 Patentblatt 88/48**

(45) Bekanntmachung des Hinweises auf die
Patenterteilung:
**24.07.91 Patentblatt 91/30**

(84) Benannte Vertragsstaaten:
**CH DE FR IT LI NL**

(56) Entgegenhaltungen:
**DE-B- 1 258 360**
**FR-A- 1 076 154**
**GB-A- 648 899**
**US-A- 4 247 250**
**PATENT ABSTRACTS OF JAPAN, Band 8, Nr.**
**90 (M-292)[1527], 25. April 1984; & JP-A-59 5809**
**(NISSAN JIDOSHA K.K.) 12-01-1984**

(73) Patentinhaber : **DEUTSCHE BABCOCK-
BORSIG AKTIENGESELLSCHAFT
Egellsstrasse 21
W-1000 Berlin 27 (DE)**

(72) Erfinder : **Griepentrog, Hartmut, Prof. Dr.
Dohne 111
W-4330 Mülheim (DE)**
Erfinder : **Beer, Helmut
Schramberger Strasse 43
W-1000 Berlin 28 (DE)**

(74) Vertreter : **Müller, Jürgen, Dipl.-Ing.
Deutsche Babcock AG Lizenz- und
Patentabteilung Duisburger Strasse 375
W-4200 Oberhausen 1 (DE)**

## Beschreibung

Die Erfindung betrifft ein Spiralgehäuse für Turbo-Strömungsmaschinen mit den Merkmalen des Oberbegriffes des Patentanspruches 1.

Das Spiralgehäuse stellt das Verbindungsglied zwischen einer Rohrleitung und dem ringförmigen Ein- oder Austritt des Turbomaschinen-Laufrades dar. Es hat die Aufgabe, das Strömungsmedium ringförmig vom oder zum Laufrad zu leiten und muß dem inneren Unter- oder Überdruck widerstehen. Durch die Formgebung des Spiralgehäuses soll das Turbomaschinen-Laufrad gleichmäßig beaufschlagt, das Strömungsmedium verlustarm geleitet, der innere Über- oder Unterdruck sicher eingeschlossen und die Belastung aus der Rohrleitung sicher übertragen werden. Ferner sollen der Werkstoffaufwand bei vorgegebenen zulässigen Spannungen, Dehnungen und Korrosion gering, der Berechnungs-, Konstruktions- und Fertigungsaufwand niedrig und die äußeren Abmessungen klein sein.

Es werden gegossene und geschweißte Spiralgehäuse gebaut. Die gegossenen Spiralgehäuse haben vorwiegend kreisförmige oder elliptische Strömungsquerschnitte, während die geschweißten Spiralgehäuse quadratische, rechteckige oder auch dreieckige Strömungsquerschnitte aufweisen. Um den Überdruck oder Unterdruck des Strömungsmediums aufzunehmen, sind entsprechend dicke Wandungen oder Querrippen erforderlich, die vorwiegend auf Biegung beansprucht werden. Maßgebend für die Dimensionierung ist die Axialdehnung des Spiralgehäuses. Die axialen Gehäusedehnungen beeinflussen den Spalt zwischen Laufrad und Gehäuse und somit den Wirkungsgrad und die Betriebssicherheit der Turbomaschine. Die bekannten Spiralgehäuseformen müssen, da sie vorwiegend auf Biegung beansprucht werden, mit sehr großen Wanddicken oder Querrippenverstärkungen ausgeführt werden, um die Axialdehnungen klein zu halten.

Aus der GB-A-648 899 ist ein Spiralgehäuse für Wasserturbinen bekannt, das eine im Querschnitt ebene Umfangswand aufweist, an die sich nach innen konvergierende Wandteile anschließen. Das Spiralgehäuse der aus der DE-B-1 258 360 bekannten Strömungsmaschine ist in kegelstumpfförmige Ringe verzweigt, die mit den Ringkränzen eines Vorleitschaufelkranzes verbunden sind. Diese Ringe und Ringkränze bilden verwindungs- und formsteife Krafteinleitungsringe mit einem geschlossenen Hohlprofilquerschnitt.

Der Erfindung liegt die Aufgabe zugrunde, die Dehnsteifigkeit der Spiralgehäuse von Turbomaschinen durch eine günstigere Form zu erhöhen.

Diese Aufgabe wird bei einem gattungsgemäßen Spiralgehäuse erfindungsgemäß durch die Merkmale im kennzeichnenden Teil des Patentanspruches 1 gelöst. Vorteilhafte Ausgestaltungen der Erfindung sind in den Unteransprüchen angegeben.

Die mit der Erfindung erzielbaren Vorteile bestehen insbesondere darin, daß statt eines auf zulässige Dehnungen bemessenen Spiralgehäuses, ein unverripptes, auf Festigkeit dimensioniertes Spiralgehäuse verwendet wird, das einen geringeren Materialaufwand hat. Die Gehäusewandungen werden hauptsächlich auf Zug- oder Druckspannungen beansprucht und wenig auf Biegespannungen. Die äußere Gehäuseform läßt sich leicht festigkeitsmäßig berechnen. Die relativ geringen, weil auf Festigkeit berechneten Wanddicken erfordern insbesondere beim Fügen durch Schweißen einen geringeren Arbeitsaufwand, und auch die Verformungen durch die eingebrachte Schweißwärme sind weniger groß. Durch den Entfall der Versteifungsrippen verringert sich der Konstruktionsaufwand. Dies alles erleichtert die Einzelfertigung von Spiralgehäusen, die den Betriebsbedingungen genauer angepaßt werden können und damit einen besseren Wirkungsgrad ermöglichen. Durch die Gestaltung des Spiralgehäuses ist die Strömungsführung von der Festigkeitsfunktion getrennt, so daß nachträgliche Änderungen der Strömungsführung leichter möglich sind. Die einfache Form des Spiralgehäuses ermöglicht eine genauere Vorausberechnung der axialen Dehnungen, wodurch der Spalt zwischen Laufrad und Gehäuse kleiner ausgeführt werden kann, was einen besseren Wirkungsgrad ohne Verringerung der Betriebssicherheit ermöglicht.

Mehrere Ausführungsbeispiele sind in der Zeichnung dargestellt und werden im folgenden näher erläutert. Es zeigen

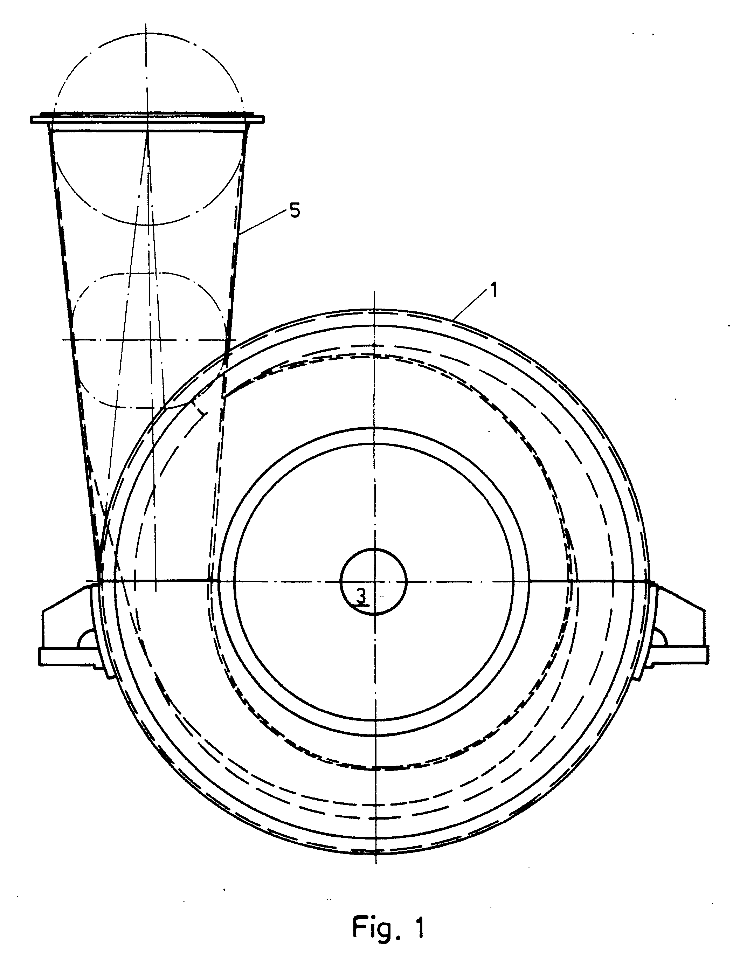

Fig. 1      die Seitenansicht eines Spiralgehäuses,

Fig. 2      den Schnitt quer zur Umfangsströmung und

Fig. 3      den Schnitt durch eine andere Ausführungsform des Spiralgehäuses.

Das Spiralgehäuse einer Turbomaschine weist einen Gehäusemantel 1 auf, der auf der einen Seite an einer Deckplatte 2 befestigt ist.

Durch eine zentrale Bohrung 3 der Deckplatte 2 ist die Welle eines nicht dargestellten Laufrades geführt. Auf der der Deckplatte 2 abgewandten Seite enthält das Spiralgehäuse eine axiale Öffnung 4. Radial oder tangential ist an den Gehäusemantel 1 ein sich erweiternder Stutzen 5 angeschlossen. Beim Betrieb der Turbomaschine als Verdichter stellt der Stutzen 5 den Gasaustritt dar und der Gaseintritt erfolgt axial durch das nicht dargestellte Laufrad in der Öffnung 4, während bei einem Betrieb als Gasturbine sich Gaseintritt und Gasaustritt umkehren.

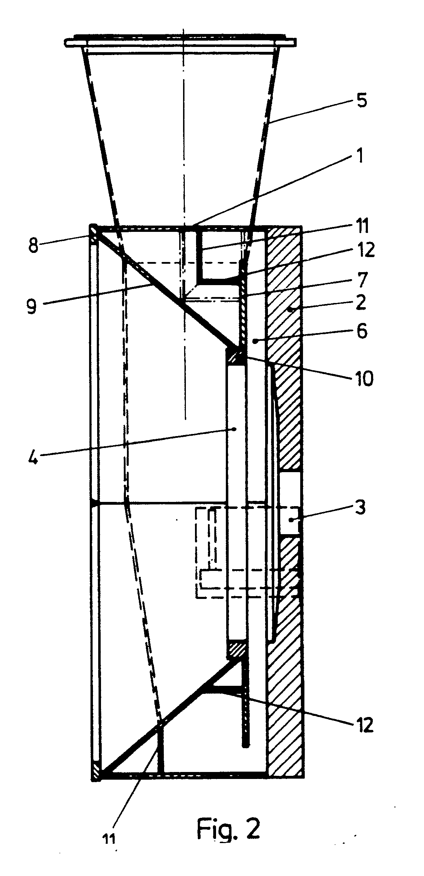

Das Laufrad ist von einem radialen Diffusorkanal 6 umschlossen, der durch eine Diffusorscheibe 7 und die Deckplatte 2 begrenzt ist. Nach Fig. 2 ist der Gehäusemantel 1 rohrförmig ausgebildet. Er ist an der einen Seite mit der Deckplatte 2 und an der anderen Seite mit einem Stützring 8 verbunden. Ein Kegelmantel 9 stützt sich mit der Seite des größeren Druckmessers auf den Stützring 8 und mit der anderen Kante auf einen ringförmigen Anschlußflansch 10 ab. Der Gehäusemantel 1 und der Kegelmantel 9 sind im Profil fachwerkartig zueinander angeordnet, wobei der Stützring 8 und der Anschlußflansch 10 in Knotenpunkten des Fachwerkes liegen. Ein weiterer Knotenpunkt ist durch den Anschluß des Gehäusemantels 1 an der Deckplatte 2 gegeben. Der Stützring 8 und der Anschlußflansch 10 sind zur Minderung der Ringspannungsbelastung im wesentlichen radialdehnungssteif. Der Anschlußflansch 10 ist durch die Verbindung mit der Diffusorscheibe 7 verstärkt.

Aufgrund der fachwerkartigen Anordnung von Gehäusemantel 1 und Kegelmantel 9 herrschen in diesen Bauteilen vorwiegend Druck- und/oder Zugspannungen. Der Gehäusemantel 1 und der Kegelmantel 9 sind biegespannungsarm und dünnwandig, wobei sich die Wanddicke aus einer Festigkeitsberechnung und nicht wie bei den bekannten Spiralgehäusen aus einer Berechnung nach der Verformung ergibt.

Ein in dem Spiralgehäuse herrschender Überdruck bewirkt eine axiale und radiale Dehnung, ein Unterdruck bewirkt eine Stauchung des Gehäusemantels 1. Der Kegelmantel 9 wird axial durch den Druck auf die Kreisfläche des Anschlußflansches 10 und durch Rohrleitungskräfte und Momente belastet. Diese Kräfte werden auf den Stützring 8 eingeleitet und wirken axial auf den Kegelmantel 9 und radial nach außen auf den Stützring 8, wobei ein Teil der Radialkraftwirkung durch den Innendruck kompensiert wird. Die weitgehende Radialdehnungssteifigkeit des Stützringes 8 und des Anschlußflansches 10 vermindert die Ringspannungsbelastung. Die Diffusorscheibe 7 verstärkt den Anschlußflansch 10 gegen radiale Dehnung.

Das beschriebene Spiralgehäuse ist auf Festigkeit ausgelegt. Dabei ist die Festigkeitsfunktion von der Strömungsfunktion getrennt. Diese kann nachträglich eingebaut oder geändert werden. Sie ist bei dem in Fig. 2 dargestellten Spiralgehäuse durch zwei Leitbleche 11, 12 ohne Festigkeitsfunktion gegeben, die den Strömungsquerschnitt der Gehäusespirale umgeben. Das eine Leitblech 11 läuft schraubenlinienförmig und das andere Leitblech 12 läuft spiralförmig um. Diese beiden Leitbleche 11, 12 sind entlang einer Berührungslinie miteinander sowie mit dem Gehäusemantel 1, dem Kegelmantel 9 oder der Diffusorscheibe 7 verbunden.

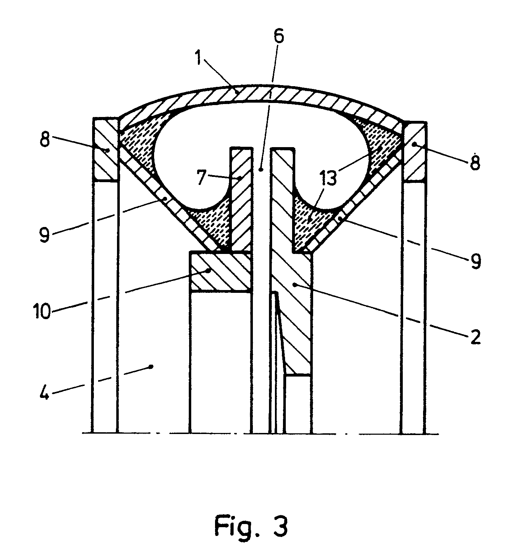

Das in Fig. 3 teilweise dargestellte Spiralgehäuse weist einen kugelförmigen Gehäusemantel 1 auf, der an beiden Enden mit je einem Stützring 8 verbunden ist. Auf jedem der Stützringe 8 stützt sich ein Kegelmantel 9 ab. Am Innendurchmesser des linken Kegelmantels 9 sitzt der ringförmige Anschlußflansch 10 mit der Diffusorscheibe 7, während der Innendurchmesser des rechten Kegelmantels 9 an der Deckplatte 2 sitzt, die mit der Diffusorscheibe 7 den Diffusorkanal 6 bildet. Die Kraftwirkungen und Dehnungen entsprechen denen des Spiralgehäuses gemäß Fig. 2.

Auch bei dem Spiralgehäuse gemäß Fig. 3 kann der Strömungsquerschnitt durch Leitbleche begrenzt werden. Es ist auch möglich, den Strömungsquerschnitt durch Füllmaterial 13 zu bilden, das auf den Gehäusemantel 1, die Kegelmäntel 9, die Diffusorscheibe 7 und die Deckplatte 2 aufgebracht ist.

**Patentansprüche**

1. Spiralgehäuse für Turbo-Strömungsmaschinen, das eine axiale Öffnung (4) aufweist und aus einem rohr- oder kugelförmigen Gehäusemantel (1) und aus einem der axialen Öffnung (4) zugewandten und mit dem größeren Umfang an dem Gehäusemantel (1) befestigten Kegelmantel (9) besteht, die im Profil fachwerkartig zueinander angeordnet sind, dadurch gekennzeichnet, daß der Gehäusemantel (1) und der Kegelmantel (9) mit radialdehnungssteifen Ringen (8, 10) oder Scheiben (7) verbunden sind, wobei die Knotenpunkte des Fachwerks in den Profilen der Ringe (8, 10) oder Scheiben (7) liegen.

2. Spiralgehäuse nach Anspruch 1, dadurch gekennzeichnet, daß innerhalb des von dem Gehäusemantel (1) und dem Kegelmantel (9) gebildeten Strömungskanals strömungsführende Einbauten angeordnet sind.

3. Spiralgehäuse nach Anspruch 2, dadurch gekennzeichnet, daß die strömungsführenden Einbauten aus einem schraubenlinienförmig und einem spiralförmig umlaufenden Leitblech (11, 12) gebildet sind.

4. Spiralgehäuse nach Anspruch 2, dadurch gekennzeichnet, daß die strömungsführenden Einbauten durch Füllmaterial (13) gebildet sind, das auf den Gehäusemantel (1) und den Kegelmantel (9) aufgebracht ist.

## Claims

1. Spiral housing for turbo-flow machines, which housing displays an axial opening (4) and consists of a tubular or spherical housing jacket (1) and a conical jacket (9), which faces the axial opening (4) and is fastened by the greater circumference to the housing jacket (1), wherein the jackets are arranged one relative to the other in the manner of a latticework in profile, characterised thereby, that the housing jacket (1) and the conical jacket (9) are connected with rings (8, 10) or discs (7), which are stiff in radial elongation, wherein the junctions of the latticework lie in the profiles of the rings (8, 10) or discs (7).

2. Spiral housing according to claim 1, characterised thereby, that flow-conducting inserts are arranged in the flow channel formed by the housing jacket (1) and the conical jacket (9).

3. Spiral housing according to claim 2, characterised thereby, that the flow-conducting inserts are formed of a helically and a spirally encircling metal guide plate (11, 12).

4. Spiral housing according to claim 2, characterised thereby, that the flow-conducting inserts are formed by filling material (13), which is applied on the housing jacket (1) and the conical jacket (9).

## Revendications

1. Carter spiral pour turbomachines, présentant une ouverture axiale (4) et composé d'une enveloppe de carter (1) tubulaire ou sphérique et d'une enveloppe conique (9), tournée vers l'ouverture axiale (4) et fixée par sa grande circonférence sur l'enveloppe de carter (1), les enveloppes étant disposées les unes par rapport aux autres en treillis, dans le profil, caractérisé en ce que l'enveloppe de carter (1) et l'enveloppe conique (9) sont reliées à l'aide d'anneaux (8, 10) ou de disques (7) rigides en dilatation radiale, les points des noeuds du treillis se trouvant dans les profils des anneaux (8, 10) ou des disques (7),

2. Carter spiral selon la revendication 1, caractérisé en ce que des habillages intérieurs guidant l'écoulement sont disposés à l'intérieur du canal d'écoulement formé par l'enveloppe de carter (1) et l'enveloppe conique (9).

3. Carter spiral selon la revendication 2, caractérisé en ce que les habillages intérieurs guidant l'écoulement sont formés par une tôle de guidage conformée en hélice et une autre en spirale (11, 12).

4. Carter spiral selon la revendication 2, caractérisé en ce que les habillages intérieurs guidant l'écoulement sont formés par un matériau de remplissage (13) appliqué sur l'enveloppe de carter (11) et l'enveloppe conique (9).

**Fig. 1**

5

Fig. 2

Fig. 3